# EUROPEAN PATENT SPECIFICATION

(11) **EP 4 593 094 B1**
(45) Date of publication and mention of the grant of the patent: **09.12.2026**
(21) Application number: 24164444.2
(22) Date of filing: 19.03.2024
(51) Int. Cl.: H01M 4/04, H01M 10/04

(54) **METHOD AND SYSTEM FOR MONITORING A BATTERY MANUFACTURING PROCESS**
VERFAHREN UND SYSTEM ZUR ÜBERWACHUNG EINES BATTERIEHERSTELLUNGSPROZESSES
PROCÉDÉ ET SYSTÈME DE SURVEILLANCE D'UN PROCESSUS DE FABRICATION DE BATTERIE

(30) Priority: 24.01.2024 KR 20240010828
(43) Date of publication of application: 30.07.2025
(60) Divisional application: 26213901.7
(73) Proprietor: LG ENERGY SOLUTION, LTD., Seoul 07335 (KR)
(72) Inventor: SIM, Min Kyu, 34122 Daejeon (KR); KOH, Jee Yeon, 34122 Daejeon (KR); KIM, Min Su, 34122 Daejeon (KR); PARK, Jong Seok, 34122 Daejeon (KR); KIM,, June Hee, 34122 Daejeon (KR); SHIN, Jong Kwon, 34122 Daejeon (KR)
(74) Representative: BCKIP Part mbB

(56) References cited:
- EP-A1- 4 156 317
- WO-A1-2024/049127
- CN-A- 102 916 160
- KR-B1- 102 458 433

## Description

### [Technical field of the Invention]

The present invention relates to a method and a system for monitoring a battery manufacturing process.

### [Background of the Invention]

Unlike primary batteries, secondary batteries can be charged or discharged a plurality of times. Secondary batteries are widely used as energy sources for various wireless devices such as handsets, notebook computers, cordless vacuum cleaners, and the like. Recently, the manufacturing cost per unit capacity of a secondary battery has been significantly reduced due to improvements in energy density and economies of scale, and as the traveling distance of a battery electric vehicle (BEV) increases to the same level as that of a fuel vehicle, the main use of secondary battery is shifting from a mobile device to mobility.

A secondary battery is manufactured through an electrode process, an assembly process, and an activation process. Among the above processes, the electrode process is the most critical process in determining the yield and performance of battery cells. The electrode process may include a coating process, a roll pressing process, and a slitting process. In the coating process, a surface of a current collector may be coated with an active material and an insulating material. In the roll pressing process, an electrode may be pressed by pressing rolls. The roll pressing process may determine the density, performance, and surface quality of the electrode. In the slitting process, the electrode may be cut into a plurality of electrodes depending on the battery cell design.

Korean Laid-open Patent Publication No. 10-2022-0134303 describes a method for monitoring a coating process of an electrode sheet, wherein an electrode sheet is continuously coated with slurry, and data related to quality or defects are measured in the electrode coating process. The measured data is visually displayed at a certain position on a roll map bar corresponding to the position of the electrode at which the pieces of data are measured. The roll map bar is a visual imitation of the electrode sheet moving in the coating process.

CN 102916160 A discloses an apparatus for forming an electrode sheet. The apparatus comprises an active material applying unit for applying an active material on a continuous transmissive electrode motherboard to form a plurality of active material regions in the longitudinal direction of the electrode motherboard, a density measuring unit for measuring the density of the active material of each of the active material regions, a position calculation unit for calculating position coordinates of the measured active material region via the density measuring unit, and an overall controller for associated storage of the position coordinates of the measured active material region outputted by the position calculation unit and the density measuring values outputted by the density measuring unit.

EP 4 156 317 A1 discloses a roll map of an electrode coating process. The roll map includes a roll map bar and a representation part configured to visually show at least one of quality-related and defect-related data measured in the electrode coating process at a certain location on the roll map bar corresponding to a location in the electrode at which the data is measured.

KR 102458433 B1 discloses a device for measuring a total length of an electrode plate on which coated and uncoated portions are repeatedly formed at regular intervals.

### [Summary of the Invention]

It is an object of the present invention to provide a solution that enables improved quality traceability and data match in a battery manufacturing process, particularly involving patterned electrodes.

To this end, the present invention provides a method in accordance with claim 1 and a system in accordance with claim 12.

According to one aspect of the present invention, a method for monitoring a battery manufacturing process is provided in which a patterned electrode sheet is formed or processed, wherein the patterned electrode sheet includes a plurality of coating patterns, each coating pattern having at least one coated and one uncoated portion. The method comprises: acquiring, while the patterned electrode sheet moves through the battery manufacturing process, pattern identification data including pattern identification codes representing a respective one of the plurality of coating patterns by its position on the patterned electrode sheet; acquiring measurement data and/or inspection data by measuring and/or inspecting the patterned electrode sheet while it moves through the battery manufacturing process; and generating monitoring data on the battery manufacturing process by associating the measurement data and/or inspection data with the pattern identification data.

The pattern identification data may be acquired as time series data in which each pattern identification code is matched with a set of time values, respectively. The measurement data and/or inspection data may be acquired as time series data in which each measurement value and/or each inspection value is matched with one time value, respectively. The pattern identification codes may be further associated with the measurement values and/or inspection values based on the time value commonly matched to them.

The method may further include at least one of the following steps: acquiring coordinate data including coordinate values indicating positions on the patterned electrode sheet; associating the coordinate data with the pattern identification data; and associating the coordinate data with the measurement data and/or inspection data. The pattern identification codes may be associated with the measurement values and/or inspection values based on the coordinate value commonly matched to them.

The plurality of coating patterns may be arranged consecutively in a longitudinal direction of the patterned electrode sheet.

A respective one of the coating patterns may include one coated portion and one uncoated portion arranged next to the one coated portion in the longitudinal direction of the electrode sheet.

The pattern identification data may include pattern numbers as pattern identification codes. Herein, acquiring the pattern identification data may include counting the coating patterns in the longitudinal direction, such that the pattern number is increased or decreased for each counted coating pattern.

The method may further comprise at least one of the following steps: detecting a length of a respective one of the coating patterns; comparing the detected length of the respective coating pattern with a target pattern length; and determining an abnormal pitch if the detected length of the respective coating pattern deviates by more than a predefined threshold from the target length.

The target pattern length may be a sum of a target length of one coated portion and a target length of one uncoated portion.

According to the invention, acquiring the pattern identification data includes: detecting, by a sensor, a start boundary line indicating one end of a respective coating pattern; storing a time point or a coordinate value of detecting the start boundary line; detecting an end boundary line indicating an opposite end of the respective coating pattern; and storing a time point or a coordinate value of detecting the end boundary line.

The length of respective one of the coating patterns may be determined by multiplying a difference between the time points of detecting the start and the end boundary line of the respective coating pattern by a moving speed of the patterned electrode sheet during the detection.

The length of each coating pattern may be determined based on a difference in coordinate values between the start boundary line and the end boundary line of the respective coating pattern.

The method may further comprise: associating the coordinate values with the time values, so that they share commonly associated identification codes and the measurement values and/or inspection values.

The method may further comprise at least one of the following steps: determining a length interval by dividing the target pattern length by an integer number greater than one; and obtaining pattern sub-position codes, each representing a position within a respective coating pattern by dividing the coordinate values by the length interval and assigning one sub-position code to each coordinate value corresponding to an integer multiple of the length interval.

If an uncoated gap section with a length greater than a target pattern length is detected between neighboring coating patterns, the method, according to the invention, assigns a corresponding pattern identification code to the gap section by: detecting the length of the gap section; determining a number of target pattern lengths fitting into the length of the gap section; and assigning to the gap section one or more pattern identification codes corresponding to the determined number of target pattern lengths.

The method may further comprise: generating a roll map from the monitoring data. The roll map be a graphical representation of the patterned electrode sheet augmented with the pattern identification data and the measurement data and/or inspection data associated with the pattern identification data and optionally further including coordinate data.

According to another aspect of the present invention, a system for monitoring a battery manufacturing process according to the method described above is provided. The system comprises: a first position measuring device configured to acquire the pattern identification data; and a measuring device and/or inspecting device configured to acquire the measurement data and/or inspection data by measuring and/or inspecting the patterned electrode sheet. The system is configured to generate the monitoring data on the battery manufacturing process by associating the measurement data and/or inspection data with the pattern identification data. and, if an uncoated gap section with a length greater than a target pattern length is detected between neighboring coating patterns, to assign a corresponding pattern identification code to the gap section by: - detecting the length of the gap section; - determining a number of target pattern lengths fitting into the length of the gap section; and - assigning to the gap section one or more pattern identification codes corresponding to the determined number of target pattern lengths.

The system may further comprise: a server configured to generate at least parts of the monitoring data on the battery manufacturing process by associating the measurement data and/or inspection data with the pattern identification data.

The system may further comprise: a controller configured to control movement of the patterned electrode sheet, in particular, between an unwinder and a rewinder. The controller and/or the measuring device and/or inspecting device may be configured to generate at least parts of the monitoring data by associating the pattern identification data with the measurement data and/or inspection data.

The system may further comprise a second position measuring device configured to acquire the coordinate data.

The server may be configured to generate the roll map and to cause a display device to display the roll map.

According to the present invention, it is possible to generate monitoring data for manufacturing a battery by using data in which a pattern number of a patterned electrode is reflected.

Accordingly, it is possible to monitor battery manufacturing processes to correspond to the state of an actual patterned electrode, thereby improving quality traceability and data match.

Furthermore, according to the present invention, it is possible to acquire coordinate data in addition to pattern number data. Therefore, monitoring data including both pattern numbers and coordinate values can be generated, thereby further improving the accuracy of the monitoring data.

Effects obtainable in exemplary embodiments of the present invention are not limited to the effects described above, and other effects that are not described can be clearly derived and understood by those skilled in the art from the following detailed descriptions to which the exemplary embodiments of the present invention pertain. That is, unintended effects resulting from implementing exemplary embodiments of the present invention may also be derived by those skilled in the art from the exemplary embodiments of the present invention.

### [Brief Description of the Drawings]

FIG. 1 illustrates a battery manufacturing system according to exemplary embodiments.
FIG. 2 illustrates a visualized roll map and patterned electrodes.
FIG. 3 is a flowchart illustrating a monitoring method according to an exemplary embodiment of the present invention.
FIG. 4 illustrates a roll map of a patterned electrode sheet in which loading amount measurement data is arranged over time.
FIG. 5 illustrates a battery manufacturing system including a monitoring system according to an exemplary embodiment of the present invention.
FIG. 6 is a flowchart illustrating a monitoring method according further embodiment of the present invention.
FIG. 7 illustrates a roll map of a patterned electrode sheet on which pattern numbers and sub-pattern numbers are marked.
FIG. 8 illustrates a battery manufacturing system including a monitoring system according to a further embodiment of the present invention.
FIG. 9 illustrates pattern identification data and coordinate data marked on a patterned electrode sheet with patterned electrodes formed on the upper and lower surfaces thereof.
FIG. 10 illustrates a roll map in which pattern identification data and coordinate data are marked in a coated section and an uncoated section.

### [Detailed Description of the Exemplary Embodiments]

Hereinafter, exemplary embodiments of the present invention will be described in detail with reference to the accompanying drawings. Prior to this, terms and words used in this specification and claims should not be interpreted as being limited to commonly used meanings or meanings in dictionaries and should be interpreted with meanings and concepts which are consistent with the technological scope of the present invention based on the principle that the inventors have appropriately defined concepts of terms in order to describe the present invention in the best way.

In addition, in the description of the present invention, when it is determined that detailed descriptions of related well-known configurations or functions unnecessarily obscure the present invention, the detailed descriptions thereof will be omitted.

Since the embodiments of the present invention are provided to more completely explain the present invention to those skilled in the art, the shapes and sizes of components in the drawings may be exaggerated, omitted, or schematically illustrated for clearer description. Therefore, the size or ratio of each component does not entirely reflect the actual size or ratio.

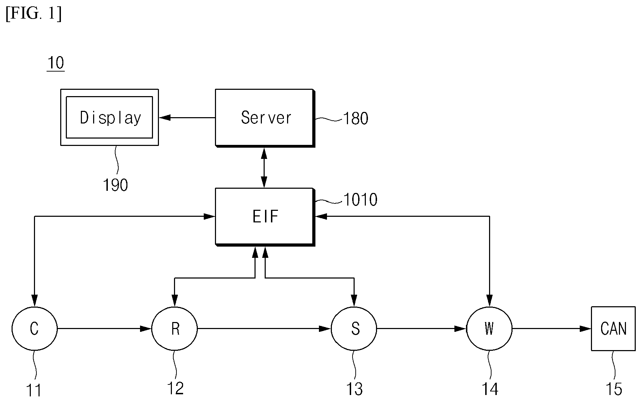

FIG. 1 illustrates a battery manufacturing system 10.

Referring to FIG. 1, the battery manufacturing system 10 may include a coating device 11, a roll pressing device 12, a slitting device 13, a winding device 14, a relay server (event integration facility (EIF)) 1010, a server 180, and a display device 190.

The battery manufacturing system 10 may be configured to manufacture battery cells (e.g., cylindrical battery cells or prismatic battery cells) by performing a series of roll-to-roll processes. An electrode sheet unwound from an input electrode roll can be processed by any one of a die coater of the coating device 11, pressure rolls of the roll pressing device 12, and a slitting knife of the slitting device 13, and the processed electronic sheet may be wound into an electrode roll. Accordingly, the processing of the coating device 11, the roll pressing device 12, and the slitting device 13 for the production of battery electrodes can be referred to as a roll-to-roll process. The winding device 14 may wind together a first electrode sheet (e.g., negative electrode sheet) unwound from a first electrode roll (e.g., negative electrode roll), a second electrode sheet (e.g., positive electrode sheet) unwound from a second electrode roll (e.g., positive electrode roll), and separator sheets unwound from separator rolls.

The EIF 1010 may be a device for communication between process controllers of a manufacturing facility and the server 180. If necessary, each process controller and the server 180 may communicate directly. Accordingly, process event data occurring in the coating device 11, the roll pressing device 12, the slitting device 13, and the winding device 14 may be transmitted to the server 180.

The server 180 may generate monitoring data for manufacturing a battery. Typically, the monitoring data may include process event data, e.g., data measured and/or inspected on the electrode sheet associated with position data, so that a roll map visually displaying the process event data can be generated. Data of the roll map may include data indicating process events and coordinate values matched or associated with the process event data. The coordinate values may indicate positions on the electrode. The server 180 may transmit a visualization command to the display device 190, and the display device 190 may visualize the roll map and display the visualized roll map (VRM).

The server 180 may generate and store the roll map of each process (e.g., the coating process, the roll pressing process, or the slitting process).

The roll map may be a type of mock electrode that imitates a moving real electrode (e.g., a real electrode moving between an unwinder and a rewinder). In other words, the roll map may be a visual representation of the electrode in which process event data is shown at a specific position corresponding a position of the real electrode where it has been acquired.

Referring again to FIG. 1, an electrode assembly manufactured by being wound in the winding device 14 may be transferred and accommodated in a case such as a can 15. A can ID that is separate can ID information may be assigned to the can, and may be a type of battery cell ID. Accordingly, it is possible to search for historical data on the manufacture of the battery cells based on the can ID.

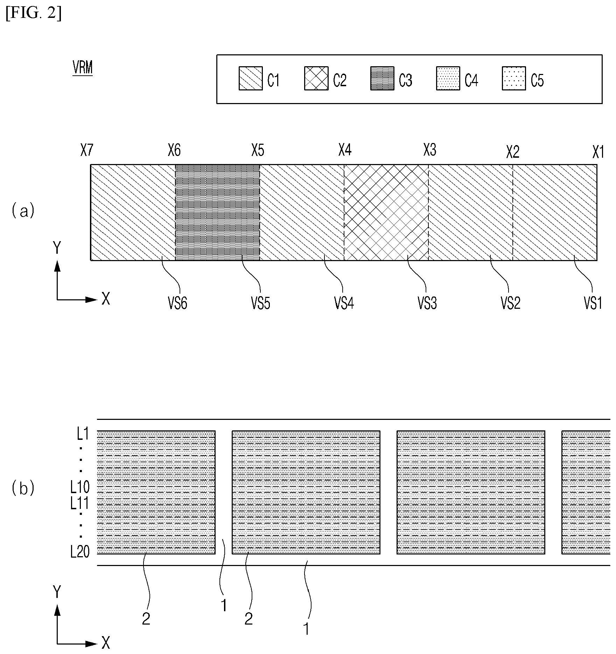

FIG. 2 illustrates a visualized roll map and patterned electrodes.

In FIG. 2, arrow X indicates a longitudinal direction (traveling direction) of an electrode (roll map), and arrow Y indicates a width direction of the electrode (roll map).

The visualized roll map VRM of FIG. 2A may include a plurality of visualization sections VS1, VS2, VS3, VS4, VS5, and VS6 corresponding to a plurality of sections of the electrode sheet. Each of the plurality of visualization sections VS1, VS2, VS3, VS4, VS5, and VS6 may include start coordinates, end coordinates, and color.

A representative value of measurement data CMD associated with the coordinates of the visualization sections VS1, VS2, VS4, and VS6 may be displayed in color C1, a representative value of the measurement data CMD associated with the coordinates of the visualization section VS3 may be displayed in color C2, and a representative value of the measurement data CMD associated with the coordinates of the visualization section VS5 may be displayed in color C3.

Color C1 may indicate that the representative value of the visualization sections VS1, VS2, VS4, and VS6 is normal, color C2 may indicate that the representative value of the visualization section VS3 is excessive, and color C3 may indicate that the representative value of the visualization section VS3 is significantly excessive. Color C4 may indicate that the representative value is insufficient, and color C5 may indicate that the representative value is significantly insufficient.

In this manner, the roll map may display the position of the electrode in coordinates and visualize measurement data (e.g., electrode slurry loading amount data) for each position, whereby the efficiency of electrode production management can be improved using the roll map and the data included in the roll map.

FIG. 2B illustrates a patterned electrode in which coated portions and uncoated portions are repeatedly arranged in the longitudinal direction to form a coating pattern. Generally, within the meaning of the present disclosure, a patterned electrode includes a plurality of coating patterns, wherein each coating pattern has at least one coated and one uncoated portion. In the example shown in FIG. 2B, multiple coating patterns are arranged neighboring to each other in the longitudinal direction of the electrode, and each coating pattern is formed by one coated portion and one uncoated portion. However, the present invention is not limited to this specific form of coating patterns. In the following, a "coating pattern" may also be referred to simply as "pattern".

The patterned electrode may be slit in the width direction with respect to an uncoated portion 1 between the coated portions 2 in a subsequent process. The slit coated portion 2 may be stacked with an electrode coated portion and a separator of a different polarity to form an electrode assembly, or may be wound together with the electrode coated portion and the separator of the different polarity to form a jelly roll-shaped electrode assembly.

In particular, a patterned electrode used for a small battery may be slit in the longitudinal direction of the patterned electrode to form a plurality of electrode lanes L1 to L20 while being slit in the width direction.

Unlike a typical electrode which is continuously coated in the longitudinal direction, a patterned electrode has coated portions formed intermittently or spaced to one another, e.g., in the longitudinal direction of the electrode. Therefore, a roll map method as shown in FIG. 2A, which indicates the longitudinal position of the electrode as length coordinates in succession, may not be suitable for the patterned electrode. For example, the uncoated portion of the patterned electrode has a loading amount represented by a measurement value of 0, while it does not significantly affect the actual battery performance, so that there is no need to display this part in detail by associating measurement data with coordinates at these positions. In addition, in the patterned electrode, the electrode assembly is made according to the length and width of the coated portion 2 forming a respective coating pattern. In other words, the electrode production performance may be determined by the total number of the coated portions 2 or coating patterns including a coated portion 2, respectively. Therefore, it would be advantageous to assign position data based on the characteristics of the patterned electrode when a patterned electrode is manufactured or processed. It is one of the ideas of the present invention to provide a method and a system that can generate monitoring data based on pattern identification data, which is position data representing respective patterns on such a patterned electrode. Preferably, the position data are virtually assigned to respective patterns - in other words, without providing corresponding physical identifications to the patterned electrode itself. This apparently can bring about many advantageous effects in the battery manufacturing process, compared to the other case of assigning/providing corresponding physical identifications to the electrode itself.

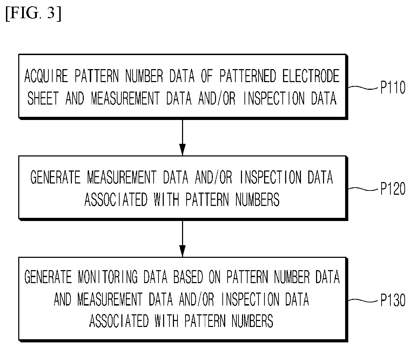

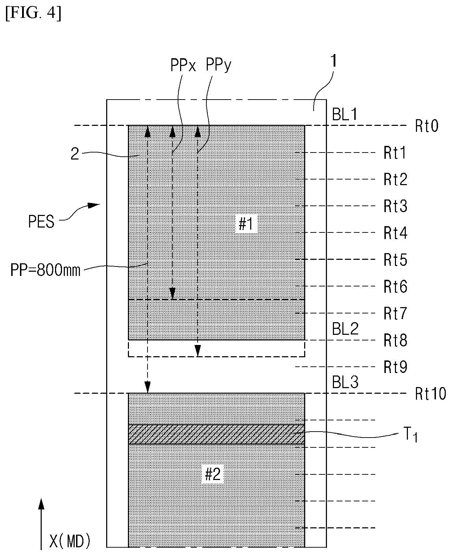

FIG. 3 is a flowchart illustrating a monitoring method FIG. 4 illustrates a roll map of a patterned electrode sheet in which loading amount measurement data is arranged over time.

In the following, a method for monitoring a battery manufacturing method process in which a patterned electrode sheet is formed or processed is described. As already discussed above, the patterned electrode sheet includes a plurality of coating patterns, and each coating pattern has at least one coated and one uncoated portion. For example, each coating pattern may include one coated portion and one uncoated portion arranged adjacent or neighboring to each other in a longitudinal direction of the electrode sheet. The battery manufacturing process may include multiple sub-processes, such as coating process, a roll pressing process, a slitting process, a notching process, and so on. In these sub-processes, the electrode sheet, generally speaking, may be physically treated in various ways, so that it can be prepared to be suitable for the subsequent sub-process. To move the electrode sheet in the respective sub-processes, unwinders and rewinders may be employed as already explained above with reference to FIG. 1. Hence, at least some of the sub-processes may include roll-to-roll processes.

Referring to FIG. 3, the method includes a step P110 of acquiring pattern identification data while the patterned electrode sheet moves through the battery manufacturing process. For example, the patterned electrode sheet may move in a longitudinal direction. The pattern identification data includes identification codes representing a respective one of the plurality of coating patterns by its position on the patterned electrode sheet. Each pattern identification code identifies one of the plurality of coating patterns and indicates its position on the electrode, e.g., with respect to the longitudinal direction of the electrode. For example, the pattern identification codes may be pattern numbers. The pattern numbers, for example, may increase or decrease for consecutive coating patterns.

As described above, in the multiple sub-processes (coating, roll pressing, slitting, etc.) for producing or processing the patterned electrode, the patterned electrode sheet may be moved in the longitudinal direction. The patterned electrode sheet may be moved between an unwinder and a winder. In this case, a first electrode roll on which the patterned electrode sheet is wound may be loaded into the unwinder. The patterned electrode sheet unwound from the unwinder may be moved after being subjected to a predetermined treatment and wound around the winder to form a second electrode roll. Alternatively, the patterned electrode sheet may be moved in the longitudinal direction by a conveyor or other driving means.

As discussed above as well, one coating pattern may refer to one coated portion and one uncoated portion consecutively from the coated portion, for example. When the pattern identification codes are assigned by considering only the coated portion or the uncoated portion as the pattern, the overall state of the patterned electrode sheet cannot be completely expressed. Referring to FIG. 2, uncoated portions may be present on both sides of one coated portion. Therefore, one pattern may be defined by including one coated portion and one uncoated portion at one side of the coated portion, or one coated portion and one uncoated portion at the other side of the coated portion. Pattern identification codes in the form of pattern numbers may, for example, be acquired by counting the coating patterns in the longitudinal direction such that the pattern number is increased or decreased for each counted coating pattern.

The pattern identification data includes the pattern identification codes, e.g., in the form of pattern numbers, assigned to each pattern. The identification codes, i.e., the pattern numbers, may be counted by, for example, a pattern counter. Accordingly, the pattern identification data may be acquired by the pattern counter. Each counted pattern number represents a position on the moving patterned electrode sheet. Therefore, the pattern counter may be a position measuring device that measures the position of the patterned electrode sheet. When recognizing a start and an end of the pattern, the pattern counter may count the pattern number of one pattern, i.e., increase or decrease the pattern number. In other words, the pattern counter may count the pattern numbers. In the following, the pattern counter that measures may be referred to as a first position measuring device. As will be described below, an encoder that measures consecutive position values (coordinate values) may be referred to as a second position measuring device.

The length of one pattern may vary depending on the type or model of the patterned electrode. The length of a pattern may also be referred to as a pattern pitch in the following. The length of one pattern specified for a specific patterned electrode sheet may be a set pattern pitch or as a target pattern length. That is, the set pattern pitch may be the sum of a set length of one coated portion and a set length of one uncoated portion.

When the length or pitch of one pattern is different from the set pattern pitch, the corresponding pattern may be classified or considered as a pattern of an abnormal pitch, as will be described in further detail below. Optionally, the method may further include an operation of comparing the set pattern pitch or target pattern length with an actual or measured length of each pattern to determine a pattern with an abnormal pitch.

The length of each pattern and/or the length of each of the coated portion and the uncoated portion included in the pattern may be derived by multiplying differences in boundary detection time points of the coated portion and the uncoated portion included in each pattern and the moving speed of the patterned electrode sheet. According to the invention, the method includes detecting a start boundary line indicating one end of a respective coating pattern, storing a time point or a coordinate value of detecting the start boundary line, detecting an end boundary line indicating an opposite end of the respective coating pattern, and storing a time point or a coordinate value of detecting the end boundary line. The length of a respective pattern, then, may be determined by multiplying a difference between the time points of detecting the start and the end boundary line of the respective coating pattern by a moving speed of the patterned electrode sheet during the detection. When the coordinate values of the start and end boundary line are detected, the length of a respective coating pattern may be determined based on a difference in the coordinate values between the start boundary line and the end boundary line of the respective coating pattern.

The pattern counter may include a pitch sensor and a trigger board. The pitch sensor may measure the length of each pattern, that is, the pitch of each pattern.

For example, the pitch sensor may be a photoelectric sensor or may include a photoelectric sensor. The photoelectric sensor may include a light emitting unit and a light receiving unit. When light emitted from the light emitting unit is blocked or reflected by an object to be detected, the amount of light reaching the light receiving unit is changed. The light receiving unit detects this change, converts the detected data into an electrical signal, and outputs the electrical signal. The amount of light emitted from the light emitting portion and reaching the light receiving portion with respect to the boundary lines between the coated portion 2 and the uncoated portion 1 on the patterned electrode is changed. Accordingly, the pattern counter equipped with the pitch sensor may determine the coated portion and uncoated portion on the patterned electrode. An optical fiber sensor may be used as the photoelectric sensor. The optical fiber sensor employs an optical fiber instead of the lens of the photoelectric sensor, and since the optical fiber, which is a detection unit, has no electrical part, it has the advantage of excellent environmental resistance such as noise resistance.

When the pitch sensor, e.g., by its optional photoelectric sensor, detects a boundary line between the coated portion and the uncoated portion, a boundary detection time point at which the respective boundary line is detected is also recorded. Accordingly, a distance between the boundary lines may be obtained by multiplying the differences (time) of the boundary detection time point of the coated portion and the uncoated portion included in each pattern and the moving speed of, for example, the patterned electrode sheet. The pitch sensor or the pattern counter may include a calculation unit for calculating the time and speed.

Referring to FIG. 4, a process of finding a pattern with an abnormal pitch using a pattern counter will be described.

When the patterned electrode sheet moves in the longitudinal direction (moving direction MD), the pattern counter may detect boundary lines BL1, BL2, and BL3 of the coated portion and the uncoated portion.

In FIG. 4, BL1 denotes a boundary line between a first uncoated portion 1 ahead of a first coated portion 2 in the moving direction MD. BL2 denotes a boundary line between the first coated portion and a second uncoated portion directly following the first coated portion in the moving direction MD. BL3 denotes a boundary line between the second uncoated portion and a second coated portion following the second uncoated portion in the moving direction MD

The pattern counter, to acquire the pattern identification data, may count the pattern numbers as the pattern identification code. For example, the pattern counter may increase the pattern number by one when BL1 and BL3 are detected for each pattern.

The pattern counter may obtain the length of the first coated portion by multiplying a difference (time) between a detection time point at which boundary line BL1 is detected and a detection time point at which boundary line BL2 is detected by the moving speed of the patterned electrode sheet.

The pattern counter may obtain the length of the second uncoated portion by multiplying the difference (time) between the detection time point at which boundary line BL2 is detected and the detection time point at which boundary line BL3 is detected by the moving speed of the patterned electrode sheet.

The pattern counter may obtain the length (pitch) of a first pattern #1 by multiplying the difference (time) between the detection time point at which boundary line BL1 is detected and the detection time point at which boundary line BL3 is detected by the moving speed of the patterned electrode sheet. In the same way, the pattern counter may obtain the length of a second pattern #2 and further patterns (not shown in FIG. 4).

In addition, a pattern with an abnormal pitch (length) may be determined by comparing the length of the pattern with a set pattern pitch PP. In FIG. 4, PPx indicates a pattern with an abnormal pitch smaller than the set pattern pitch PP. PPy indicates a pattern with an abnormal pitch greater than the set pattern pitch PP. For example, a pattern that has a length deviating from the set pattern pitch by more than a predefined threshold, e.g., by more than 50 %, 30%, 20% or 10% of the set pattern pitch, may be determined as the abnormal pattern. The electrode portion of the abnormal pattern may be removed in a subsequent process.

The pitch sensor may transmit the length of the detected pattern to a trigger board. The trigger board may generate count information for each pattern based on the length of each pattern received from the pitch sensor. That is, the trigger board may increase the count value for each received length of the pattern. The count information may form the pattern identification data, and the trigger board may increase a binary coded decimal (BCD) code by one whenever the count value for each length of the pattern increases. The trigger board may convert the count value for each length of the generated pattern into the BCD code form and transmit the converted result to the controller of each process or the server of the battery manufacturing system. The pattern counter (trigger board) may count the pattern numbers in a way that the pattern number increases by one for each pattern (so-called ascending order). Alternatively, the pattern counter may count the pattern numbers in a way that the pattern number decreases by one for each pattern (so-called descending order). Thus, the patterns are preferably counted in a systematic manner and a pattern number is assigned to each pattern as the pattern identification code so as to be able to specify the position of a respective pattern on the electrode. Thereby, a position on the electrode may easily be found by counting the patterns starting from a known position/pattern.

Electrode specification data ESD may include model information, a recipe, e.g., of the coating material applied to the electrode sheet, and a set pattern pitch of the electrode sheet. The electrode specification data ESD may include various details related to the number of lots processed in the current process, the number of lanes of the coated portion provided on the electrode sheet, the process condition including temperature, humidity, and pressure, the moving speed of the electrode sheet, discharge volume of coating die, pressure of pressing rolls, etc. The electrode specification data ESD may be stored in the controller or server of each process. The pattern counter may download information about the set pattern pitch from the controller or server and find the pattern of the abnormal pitch.

As further shown in FIG. 3, in step P110, measurement data and/or inspection data is acquired by measuring and/or inspecting the patterned electrode sheet while it moves through the battery manufacturing process. The measurement data and/or inspection data may include all kind of data that can be obtained through measurement or inspection on the patterned electrodes. The measurement data and inspection data may be acquired by the measurement and inspecting devices that measure and inspect the electrodes.

The measurement data may include measurement results expressed in numerical values. For example, the measurement data may include dimensional data of the patterned electrode sheet PES such as thickness and width, data of a loading amount of coating material on the patterned electrode sheet PES, mismatching data between lanes of the coated portion on the upper surface of the patterned electrode sheet PES and lanes of the coated portion on the lower surface the patterned electrode sheet PES. As a non-limiting example, the measuring device may be either a web gauge or thickness measuring device made by Thermo Fisher Scientific Inc.

The inspection data may include judgements and process events regarding the quality of the portions of the patterned electrode sheet PES. For example, the inspection data may include data on the appearance of the patterned electrode sheet PES collected by an image-based inspecting device such as a vision machine, data on the disconnection and seams of the patterned electrode sheet PES, data of the portion of the patterned electrode sheet PES on which sampling inspection was performed, data of a portion where the patterned electrode sheet PES is scheduled to be scraped, data of reference points indicating the position of the patterned electrode sheet PES, and defective data such as pinhole defects, crater defects, and line defects. The inspecting device may be any of a color sensor, a seam sensor, a reference point sensor, and a vision machine.

The pattern identification data, measurement data, and inspection data may be time series data. The pattern identification data includes the pattern identification codes, e.g., in the form of pattern numbers, and time values matched to the pattern numbers. That is, a respective pattern identification code may be matched with a set of time values. In the example of FIG. 4, the coating pattern #1, for example, may be matched with at least the time values at which boundary lines BL1 and BL3 are detected, and preferably additionally with all time values between the detection time points of detecting boundary lines BL1 and BL3. Similar, the measurement data and/or inspection data may include measurement values and/or inspection values, wherein each measurement value and/or each inspection value is matched with one time value, respectively.

That is, the pattern numbers, measurement values, and inspection values may be arranged over time.

As further shown in FIG. 3, the monitoring method includes generating monitoring data on the battery manufacturing process by associating measurement data and/or inspection data associated with the pattern identification data (P120).

For example, the pattern identification codes, e.g., the pattern numbers, and the measurement values and/or inspection values may be associated with each other to correspond to the same time value(s). That is, the pattern identification codes may be associated with the measurement values and/or inspection values based on the time value(s) commonly matched to them.

FIG. 4 exemplarily indicates that loading amounts Rt0 to Rt10 measured at measurement points t0 to t10 are displayed.

Boundary line BL1 was detected at time point t0, boundary line BL2 was detected at time point t8, and boundary line BL3 was detected at time point t10, for example, by the pattern counter. Therefore, the time values corresponding to the pattern of pattern number #1 are t0, t8, and t10. The loading amounts are measured at the time values t0, t8, and t10 are Rt0, Rt8, and Rt10, and these loading amounts become measurement values associated with pattern number #1. More specifically, the loading amounts Rt0, Rt1, Rt2, Rt3, Rt4, Rt5, Rt6, Rt7, and Rt8 measured between time points t0 to t8 become measurement values associated with the coated portion between BL1 and BL2. In addition, the loading amounts Rt8, Rt9, and Rt10 measured between t8 and t10 become measurement values associated with the uncoated portion between BL2 and BL3.

Therefore, based on the times values t0 to t10 commonly matched to the pattern identified by pattern number #1 and the loading amounts Rt0 to Rt10, pattern identification data in the form of pattern number #1 may be associated with the loading amounts Rt0 to Rt10.

In addition, as exemplarily shown in FIG. 4, start and end points of a connection tape T1 located on the coated portion of the pattern identified by pattern number #2 may be detected by the seam sensor. Seam measurement data includes a seam measurement signal and time values of detecting a start point and an end point of the connection tape T1. In this case, the seam measurement data may be associated with pattern number #2, which shares the same time values of detecting the start point and the end point of the connection tape T1.

As described above, the pattern counter may obtain the length of each pattern and the length of each of the coated portion and the uncoated portion included in each pattern by multiplying differences in the detection time point of the boundary line between the coated portion and the uncoated portion by the moving speed of the patterned electrode sheet. According to the same principle, when an appropriate calculation tool is available, it is also possible to obtain the length of the coated or uncoated portion corresponding to each measurement section by multiplying the differences (time) of measurement time points of each measurement value by the moving speed of the patterned electrode sheet. The calculation tool may be provided in, for example, the pattern counter, the process controller, the measuring device, or the inspecting device.

Associating the pattern identification data with the measurement data and/or inspection data may be performed in a controller controlling the respective (sub-)process in which the patterned electrode sheet is processed. In this case, the measurement data and inspection data acquired from the measuring device and/or inspecting device may be transmitted to the controller, and the pattern identification data acquired by the pattern counter may also be transmitted to the controller. The controller may compare the time values of the measurement data and inspection data with the time values included in the pattern identification data, and associate the pattern numbers with the measurement data and inspection data that share common time values.

Alternatively, associating the pattern identification data with the measurement data and/or inspection data may be performed in the measuring device and/or the inspecting device. In this case, the pattern identification data acquired by the pattern counter may be transmitted to the measuring device and/or inspecting device directly or through the controller. The measuring device and/or inspecting device may compare the acquired time values of the measurement data and inspection data with the time values included in the pattern identification data, and associate the pattern identification data with the measurement data and inspection data that share common time values.

By associating the measurement data and/or inspection data with the pattern identification data in operation P120, monitoring data is generated.

As shown in FIG. 3, the monitoring method may optionally include a further step P130 of generating a roll map from the monitoring data. The generated roll map may be a graphical representation of the patterned electrode sheet augmented with the pattern identification data and the measurement data and/or inspection data associated with the pattern identification data. Optionally, the roll map may further include coordinate data.

As described above, by assigning the pattern identification codes to the individual patterns of the patterned electrode, the positions of the patterns of the patterned electrode may be easily specified. As a result, a production performance of the patterned electrode can be easily determined. In addition, by associating the measurement data and/or inspection data acquired for the patterned electrode with the pattern identification code, it is possible to easily determine the state of each pattern, for example, it is possible to determine whether the electrode is broken or whether the electrode is defective. The monitoring data may be used to generate a roll map of the electrode manufacturing process. As shown in FIG. 4, the roll map for the patterned electrode may essentially include pattern identification data including the pattern identification codes, here, in the form of pattern numbers, and measurement data or inspection data associated with the pattern identification codes. The measurement data and/or inspection data are a type of process event data that may be generated or acquired in each (sub-)process. The roll map may be cumulatively generated for work pieces, parts, semi-finished products, and products of unit processes, thereby enabling tracking of process history for shipped products (e.g., battery cells, battery modules, or battery packs).

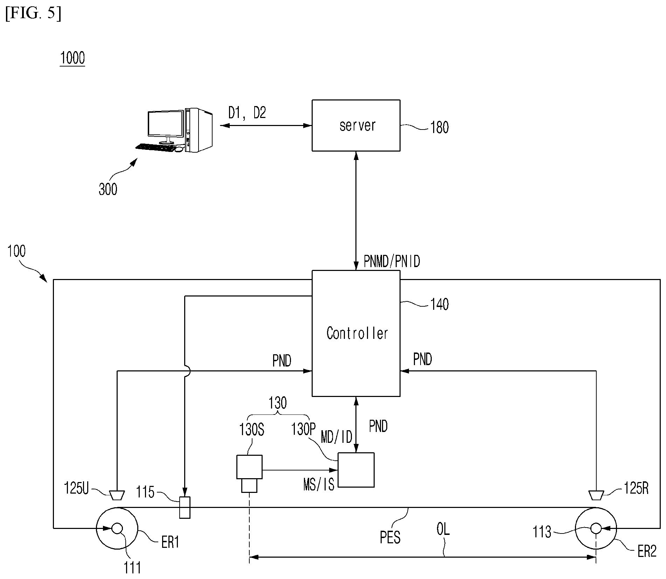

FIG. 5 illustrates a battery manufacturing system.

A battery manufacturing system 1000 may include a battery manufacturing apparatus 100, a server 180, and a user device 300.

The battery manufacturing system 1000 may include an unwinder 111, a rewinder 113, a processing mechanism or facility 115, first position measuring devices 125R and 125U, a measuring device and/or inspecting device 130, and a controller 140. The first position measuring devices 125R, 125U, the measuring device and/or inspecting device 130, and, optionally, the controller 140 and/or the server 180 may form a monitoring system for monitoring a battery manufacturing process. This monitoring system may be configured to carry out the monitoring method described above.

The unwinder 111 may be configured to unwind a patterned electrode sheet PES from electrode roll ER1. The rewinder 113 may be configured to wind the patterned electrode sheet PES into patterned electrode roll ER2. Accordingly, the patterned electrode sheet PES may move between the unwinder 111 and the rewinder 113.

The patterned electrode sheet PES may move within the battery manufacturing system an being subject to one or more sub-processes. For example, an electrode process may be carried out on the patterned electrode sheet PES.

The electrode sheet or patterned electrode sheet PES may be processed by the processing mechanism 115. For example, the processing mechanism 115 may include a coater, and an electrode slurry may be applied on the electrode sheet to form a patterned electrode sheet PES. As another example, the processing mechanism 115 may include a pressing roll, and a roll pressing process may be performed on the patterned electrode sheet PES coated with the electrode slurry. As another example, the processing mechanism 115 may include a splicing die and a scrap pot, and portions of the patterned electrode sheet PES may be scrapped. As another example, the processing mechanism may include a slitting knife and the patterned electrode sheet PES may be separated into a plurality of electrode sheets.

The first position measuring devices 125R and 125U may be pattern counters that count the pattern numbers on the patterned electrode sheet or otherwise acquire pattern identification data as explained above.. The pattern identification data includes pattern identification codes, e.g., in the form of pattern numbers, that indicate position on the patterned electrode sheet PES moving between the unwinder and the rewinder.

The first position measuring device 125U installed on the unwinder side may be configured to detect the amount or length of the electrode sheet or patterned electrode sheet PES unwound from electrode roll ER1 by the unwinder 1111. The controller 140 may be configured to collect pattern identification data PND generated by the first position measuring device 125U.

The first position measuring device 125R installed on the rewinder side may be configured to sense the amount or length of the patterned electrode sheet PES wound around patterned electrode roll ER2 by the rewinder 113. The controller 140 may be configured to collect pattern identification data PND generated by the first position measuring device 125R. The pattern identification data PND may indicate the production result of the battery manufacturing apparatus 100. Hereinafter, an example will be described in which the controller 140 collects the pattern identification data PND generated by the first position measuring device 125R. However, the invention is not limited to this example.

As a non-limiting example, the controller 140 may be a process controller that controls the respective (sub-)process, e.g., by controlling rotation of the rewinder 113 and the unwinder 111 and/or the processing facility 115. and the controller 130 may be a programmable logic controller (PLC). The controller 140 may include a power supply, a CPU, an input interface, an output interface, a communication interface, and memory devices. The communication interface may be configured to transmit and receive data between the controller 140 and the first position measuring devices 125U and 125R, and between the measuring device and/or inspecting device 130 and the server 180.

The measuring device may be configured to collect measurement data MD by measuring the patterned electrode sheet PES. The inspecting device may be configured to collect inspection data ID by inspecting the patterned electrode sheet PES. There may be one or more measuring devices or inspecting devices. In the present embodiment, for convenience of explanation, the measuring device and/or inspecting device are combined and denoted by one reference numeral 130.

The measuring device and/or inspecting device may include a sensing unit 130S and a processing unit 130P. The sensing unit 130S may be configured to sense a physical quantity of an electrode sheet ES to generate a measurement signal MS or an inspection signal IS. For example, the sensing unit 131S may include a time delay and integration (TDI) camera, a complementary metal oxide semiconductor (CMOS) image sensor, and a time of flight (TOF) sensor.

The processing unit 130P may be configured to receive the measurement signal MS or the inspection signal IS sensed by the sensing unit 130S to collect the measurement data MD or the inspection data ID. The processing unit 130P may be connected to the sensing unit 130S in a wired or wireless manner.

The controller 140 may collect the measurement data and/or inspection data MD/ID generated by the measuring device and/or inspecting device 130. In addition, the controller 140 may be configured to control the operations of the unwinder 111, the rewinder 113, and the processing mechanism 115. Signals for operating and stopping the unwinder 111, the rewinder 113, and the processing mechanism 115 may be generated based on electrode specification data ESD, and additional inspection signals and measurement signals.

As explained above, pattern identification codes, e.g., in the form of numbers, included in the pattern identification data PND may be associated with the measurement data and/or inspection data MD/ID. For example, the pattern codes collected based on a specific time value may be associated with measurement data and/or inspection data MD/ID that matches the same time value. The processing unit 130P of the measuring device and/or inspecting device may receive pattern identification data PND from the first position measuring devices 125U and 125R and associate the pattern number with the measurement data and/or inspection data. Alternatively, the pattern identification data and the measurement data and/or inspection data may be transmitted to the controller 140 so that the pattern identification codes may be associated with the measurement data and/or inspection data by the controller 140.

Optionally, if required, the measuring device and/or inspecting device 130 or the controller 140 may correct the pattern identification data PND based on an offset length OL.

Since the position of the measuring device and/or inspecting device and the position of the first position measuring device are different, the portion of the patterned electrode sheet PES that is measured and/or inspected and a portion of the patterned electrode sheet PES on which a pattern identification code is acquired by the first position measuring device at the same time point may be different. Therefore, the pattern identification code may be corrected by adding or subtracting a number of pattern identification codes acquired in a section of the electrode sheet corresponding to the offset length to or from the pattern identification data PND collected at the same time as the measurement data and/or inspection data, and the measurement data and/or inspection data associated with the corrected pattern identification codes may be obtained by associating the corrected pattern identification codes with the measurement data and/or inspection data. Such correction of the pattern identification data PND may be performed in the processing unit 130P or the controller 140 of the measuring device and/or inspecting device.

The monitoring data generated in the processing unit 130P by associating measurement data and/or inspection data associated with the pattern identification data may be transmitted to the server 180 directly or through the controller 140. Alternatively, the monitoring data generated in the controller 140 may be transmitted to the server 180.

The server 180 may generate a roll map from the monitoring data including the pattern identification data PND and measurement data and/or inspection data PNMD/PNID associated with the pattern identification data. The server 180 may perform various tasks for managing battery production in addition to generation of a roll map. As an example, a battery cell may include a cell ID provided on an electrode assembly or case. The cell ID may include lot number and coordinate information of electrodes and separator included in the battery cell. The cell ID may be associated with the roll map of the electrodes and separator included in the battery cell. Accordingly, when an event such as a quality issue occurs in the battery cell that has already been shipped, the history of collective data in the manufacturing the battery cell may be retrieved based on the cell ID.

The user device 300 may display a visualized roll map VRM as shown in FIG. 4. The user device 300 may be any device for communicating with the server 180, such as a workstation computer, a notebook computer, a laptop computer, a desktop computer, a tablet computer, a mobile device such as a smartphone, or a wearable device. The user device 300 may be configured to generate a request for loading the roll map. The server 180 may be configured to transmit various types of data D1 and D2 of the roll map to the user device.

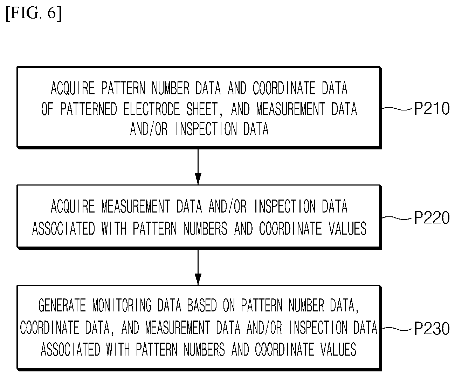

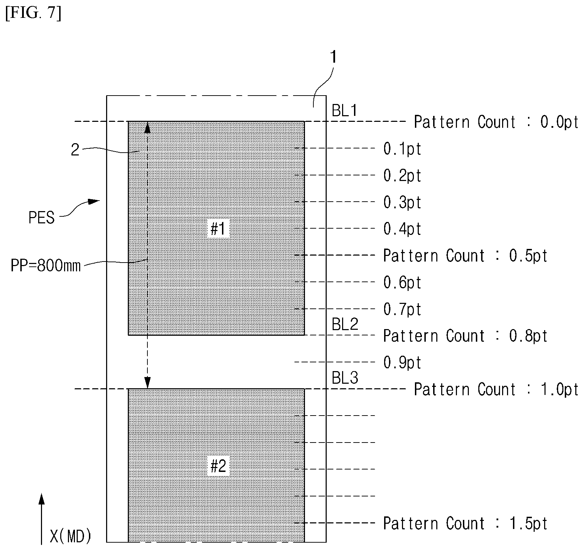

FIG. 6 is a flowchart illustrating a flowchart of a further monitoring method. FIG. 7 illustrates a roll map of a patterned electrode sheet on which pattern identification codes in the form numbers and sub-pattern numbers are marked.

As shown in FIG. 6, the method may include a step P210 in which pattern identification data including pattern identification codes, coordinate data including coordinate values indicating longitudinal positions of the patterned electrode sheet, and measurement data and/or inspection data for the patterned electrode sheet are acquired while the patterned electrode sheet moves through the battery manufacturing process . Each pattern identification code identifies one of the plurality of coating patterns and indicates its position on the electrode, e.g., with respect to the longitudinal direction of the electrode. For example, the pattern identification codes may be pattern numbers. The pattern numbers, for example, may increase or decrease for consecutive coating patterns. The pattern identification codes and the measurement data and/or inspection data may be acquired in the same way as in step P110 of the method discussed above in connection with FIG. 3.

In order to calculate the length (pitch) of the pattern or the length of a section where the measurement data and/or inspection data is acquired, a method of using the moving speed or time difference of the patterned electrode sheet requires an additional calculation tool. In addition, since the moving speed of the patterned electrode sheet is not always constant, there are cases where a time point at which specific data is measured on the patterned electrode sheet and the position of the patterned electrode sheet at that time point do not correspond to each other accurately. In addition, the moving speed of the patterned electrode sheet may change depending on the standard of the patterned electrode sheet, a type of a model, a type of processing process, and driving mechanism of a processing device. Therefore, indirectly obtaining the position or distance of the patterned electrode sheet using the changed moving speed and time difference may delay the data processing speed and increase the manufacturing costs.

In the method exemplarily shown in FIG. 6, therefore, the pattern identification data and the coordinate data may be used together to indicate and/or display the longitudinal position of the patterned electrode sheet. For example, the pattern identification data including the pattern identification codes, e.g., in the form of pattern numbers, indicating the positions on the patterned electrode sheet may be acquired as main position data, and at the same time, the coordinate data including the coordinate values indicating the longitudinal positions may be further acquired. The coordinate values and the difference between the coordinate values directly indicate the position of the patterned electrode sheet or a distance between specific sections or points on the electrode sheet. Accordingly, by acquiring the coordinate data, it is possible to acquire position information about the patterned electrode sheet more accurately even without performing the additional calculations described above by excluding the influence of the moving speed of the electrode sheet. By associating the coordinate data with the pattern identification data, with the measurement data and/or inspection data, or with the measurement data and/or inspection data associated with the pattern number, state information about the patterned electrode sheet may be obtained more accurately and reliably.

A first position measuring device (pattern counter) may be used to acquire the pattern identification data. A second position measuring device may be additionally used to acquire the coordinate data. The second position measuring device may include at least one rotary encoder that is configured to generate a position signal of the patterned electrode sheet moving according to the rotation amount of the unwinder or rewinder as an encoder value. Alternatively, the second position measuring device may include a linear encoder that is configured to generate a position signal corresponding to the moving displacement of the patterned electrode sheet as an encoder value. The encoders may be configured in a contact or non-contact manner with the electrode sheet. The second position measuring device may be equipped with a calculation unit configured to convert the encoder value into a coordinate value. Alternatively, the controller may receive the encoder value and convert the encoder value into the coordinate value through a predetermined calculation. Considering the computational load exerted on the process controller, it may be desirable that the encoder directly converts the encoder value into the coordinate value.

By comparing a set pattern pitch or target pattern length with the coordinate data, sub-position codes, e.g., in the form of sub-pattern numbers, obtained by further subdividing the pattern numbers may be obtained.

FIG. 7, exemplarily and schematically shows a patterned electrode sheet PES that moves in the longitudinal direction X, which is the moving direction MD.

The first position measuring device, which may be pattern counter, detects the boundary lines BL1, BL2, and BL3 of the coated portions 2 and the uncoated portions 1 and acquires pattern numbers or other pattern identification codes as part of the pattern identification data, as described above in connection with FIG. 4 and as shown in FIG. 7. The second position measuring device, which may be a rotary encoder, may acquire coordinate data in the form of coordinate values based on the encoder values. The coordinate values of the boundary lines BL1, BL2, and BL3, which indicate a longitudinal position of each of pattern #1 and #2, may be determined as those coordinate values being acquired at the same time point at which the first position measuring instrument detects the boundary lines BL1, BL2, BL3, for example.

In the example of FIG. 7, the set pattern pitch PP or target pattern length is 800 mm and is divided into ten equal parts, and the pattern number may be displayed in decimal units. For example, when the patterned electrode sheet moves by 80 mm and the controller receives the coordinate value corresponding to 80 mm, the controller may count the pattern number of 0.1Pt at the position corresponding to the coordinate value of 80 mm. Until the patterned electrode sheet moves by 800mm and the first position measuring device detects the boundary BL3 of the coated portion of pattern number #2, the controller may count the sub-pattern numbers from 0.1Pt to 1.0Pt to correspond to the coordinate value of each point. That is, generally, a length interval is determined by dividing the target pattern length by an integer number greater than one, pattern sub-position codes, e.g., in the form of sub-pattern numbers, representing a position within a respective coating pattern are obtained by dividing the coordinate values by the length interval and assigning one sub-position code to each coordinate value corresponding to an integer multiple of the length interval. Thereby, the coordinate values can be expressed as values related to the target pattern length.

As described above, by comparing the set pattern pitch and the coordinate data to calculate the pattern sub-position codes, the pattern identification codes can be displayed in more detail. Accordingly, a pattern having an abnormal pitch can be determined easier.

For example, in FIG. 7, the pattern of the abnormal pitch can be determined by comparing the set pattern pitch and the length of each pattern.

In this case, the length of each pattern and/or the length of each of the coated portion and the uncoated portion included in the pattern may be determined based on a difference in coordinate values between the start and end boundary lines of each pattern, a difference in coordinate values between the start and end boundary lines of the coated portion, and a difference in coordinate values of the start and end boundary lines of the uncoated portion. In this case, since the coordinate values directly indicate the positions of the respective boundary lines, the lengths of the respective coated and uncoated portions may be easily determined and compared with the pattern pitch. In particular, the length (pitch) of the pattern may be intuitively obtained without a separate time based calculation relying on the moving speed of the electrode sheet. Therefore, it is possible to identify patterns deviating from the set pattern pitch more rapidly.

The method as shown in FIG. 7 may further include generating monitoring data by associating the pattern identification data, the coordinate data, and the measurement data and/or inspection data with each other (step P220).

As described with respect to the method shown in FIG. 3, the pattern identification codes and measurement values of the measurement data and/or inspection values of the inspection data may be associated with each other to correspond to the same time value(s). In addition to this, the coordinate values of the coordinate data may be associated with one or more of the following: i) the pattern identification codes; ii) measurement values and/or inspection values; and iii) pattern identification codes and time values matched to the measurement values and/or inspection values.

Since the coordinate values are associated with the identification codes, the coordinate data and the pattern identification data are associated with each other.

In addition, since the coordinate values correspond to the measurement values and/or inspection values, the coordinate data and the measurement data and/or inspection data are associated with each other.

From this, the pattern identification data may be associated with the measurement data and/or inspection data based on the coordinate values (coordinate data), even excluding time values (time series data).

In addition, the coordinate values may be associated with the pattern numbers and the time values matched to the measurement values and/or inspection values. In this case, the pattern identification data is associated with the measurement data and/or inspection data based on the time values (time series data) and the coordinate values (coordinate data). Generally, also the coordinate data may be acquired as time series data, and the coordinate values of the coordinate data may be associated with the pattern identification codes of the pattern identification data and the measurement and/or inspection values of measurement data and/or inspection data based on the time values commonly matched to them.

As further shown in FIG. 7, the method may include an optional step P230 of generating a roll map from the monitoring data which includes the pattern identification data, coordinate data, and the measurement data and/or inspection data associated with each other. The generated roll map may be a graphical representation of the patterned electrode sheet augmented with the pattern identification data, the measurement data and/or inspection data associated with the pattern identification data, and optionally, the coordinate data.

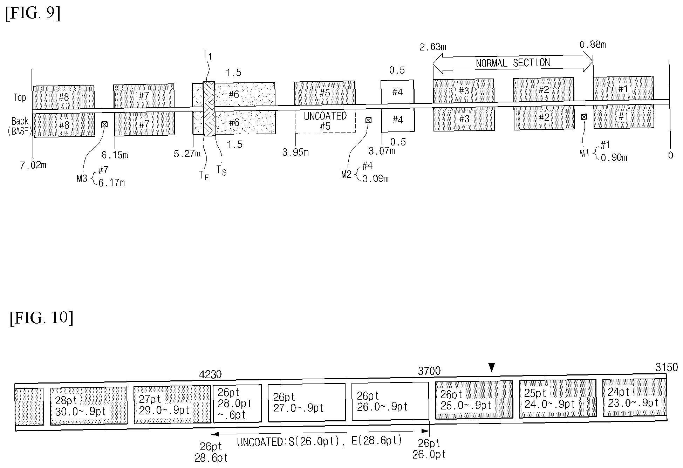

As shown in FIGS. 9 and 10 described below, the roll map regarding the patterned electrode may include the pattern identification data including the pattern identification codes, e.g., in the form of pattern numbers, the coordinate data including the coordinate values, and measurement data or inspection data associated with the pattern numbers and the coordinate values. Using this roll map, the length, state, and characteristics of the pattern on the patterned electrode sheet can be determined more comprehensively and intuitively.

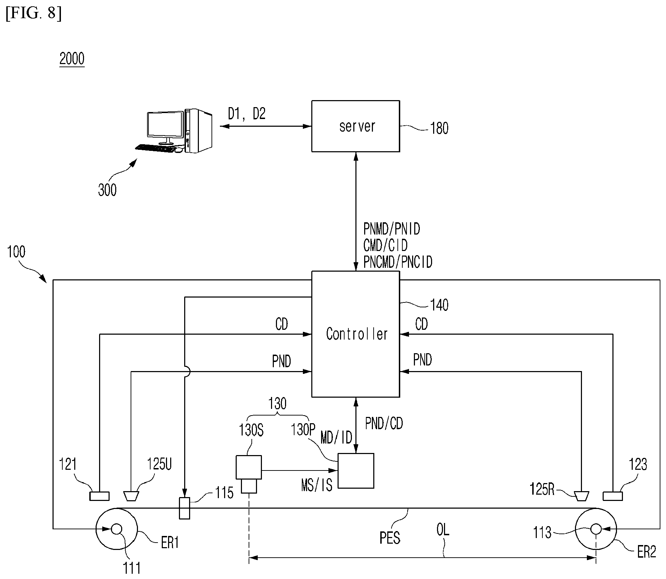

FIG. 8 exemplarily illustrates a further battery manufacturing system.

The battery manufacturing system 2000 may include a battery manufacturing apparatus 100, a server 180, and a user device 300.

The battery manufacturing apparatus 100 may include an unwinder 111, a rewinder 113, a processing mechanism or facility 115, first position measuring devices 125R and 125U, second position measuring devices 121 and 123, a measuring device and/or inspecting device 130, and a controller 140.

The system shown in FIG. 8 differs from the system shown in FIG. 5 in that second position measuring devices 121 and 123 are added. Coordinate data may be acquired by the second position measuring devices 121 and 123, and t the coordinate data is associated with other data. Repeated descriptions of the same points between the second embodiment and the first embodiment will be omitted.

The first position measuring devices 125R, 125U, second position measuring devices 121 and 123, the measuring device and/or inspecting device 130, and, optionally, the controller 140 and/or the server 180 may form a monitoring system for monitoring a battery manufacturing process. This monitoring system may be configured to carry out the monitoring method described above.

Pattern identification data PND including pattern identification codes, e.g., in the form of pattern numbers, indicating positions on the patterned electrode sheet may be acquired by the first position measuring devices 125R and 125U, which may be pattern counters. The controller 140 may collect, for example, pattern identification data PND generated by the first position measuring device 125U installed in the rewinder 113.

The second position measuring device may, for example, include a rotary encoder.

The first rotary encoder 121 of the second position measuring device may be configured to sense the amount or length of a patterned electrode sheet PES unwounded from electrode roll ER1 by the unwinder 111. Accordingly, the first rotary encoder 121 may be configured to generate an unwound amount signal indicating the unwound amount or length of the patterned electrode sheet PES. The first rotary encoder 121 may directly acquire input amount data corresponding to coordinate data by converting the unwound amount signal. Alternatively, the first rotary encoder 121 may transmit the unwound amount signal to the controller 140, and the controller 140 may convert the signal to collect the input amount data. The input amount data is the amount or length of material (i.e., electrode roll ER1) input into the battery manufacturing apparatus 100 to manufacture a battery, and is coordinate data CD.

The second rotary encoder 123 may be configured to sense the amount or length of the patterned electrode sheet PES wound around electrode roll ER2 by the rewinder 113. Accordingly, the second rotary encoder 123 may be configured to generate a winding amount signal indicating the winding amount of the electrode sheet ES. The second rotary encoder 123 may convert the winding amount signal to directly acquire consumption amount data corresponding to coordinate data. Alternatively, the second rotary encoder 123 may transmit the winding amount signal to the controller 140, and the controller 140 may convert the transmitted signal to collect the consumption amount data. The consumption amount data may indicate the production performance of the battery manufacturing apparatus 100.

The controller 140 may associate the pattern identification data PND with the coordinate data CD.

The measuring device and inspecting device 130 may measure and/or inspect the patterned electrode sheet PES to collect measurement data MD and/or inspection data ID.

The processing unit 130P of the measuring device and/or inspecting device may be configured to receive a measurement signal MS or an inspection signal IS sensed by the sensing unit 130S to collect the measurement data MD or the inspection data ID.

The controller 140 may collect the measurement data and/or inspection data MD/ID generated by the measuring device and/or inspecting device 130.

The pattern identification codes, e.g., the pattern numbers, of the pattern identification data PND may be associated with the measurement data and/or inspection data MD/ID. For example, the pattern identification codes collected at specific time values may be associated with the measurement data and/or inspection data MD/ID matching the same time value(s). Additionally or alternatively, coordinate values of the coordinate data may be associated with the measurement data and/or inspection data or the measurement data and/or inspection data associated with the pattern number. The processing unit 130P of the measuring device and/or inspecting device may receive the pattern identification data PND from the first position measuring devices 125U and 125R and associate the pattern number with the measurement data and/or inspection data. Alternatively, the pattern identification data, measurement data, and/or inspection data may be transmitted to the controller 140, and the pattern identification data, i.e., the pattern identification codes, may be associated with the measurement data and/or inspection data in the controller. In addition, the processing unit 130P of the measuring device and/or inspecting device may receive the coordinate data CD from the second position measuring devices 121 and 123 and associate the identification data, i.e., the pattern identification codes, with the measurement data and/or inspection data. Alternatively, the coordinate data and the measurement data and/or inspection data may be transmitted to the controller 140 so that the coordinate data may be associated with the measurement data and/or inspection data in the controller.

In the controller, coordinate data and pattern identification data may be associated with measurement data and/or inspection data.

Optionally, the measuring device and/or inspecting device 130 or the controller 140 may correct the pattern identification data PND and the coordinate data CD based on an offset length OL.

The principle of correcting the coordinate data based on the offset length OL is the same as the principle of correcting the pattern identification data described above. That is, since the position of the measuring device and/or inspecting device may be different from the position of the second position measuring device, the portion of the patterned electrode sheet PES that is measured and/or inspected at a specific time point may be different form the portion of the patterned electrode sheet PES that is detected by the second position measuring device at the same time point. Accordingly, the above-described coordinate data may be corrected by subtracting or adding the offset length from or to the coordinate data of the second position measuring device collected at the same time as the measurement data and/or inspection data.

The measurement data and/or inspection data CMD/CND associated with the coordinate data generated in the processing unit 130P, the measurement data and/or inspection data PNMD/PNID associated with the pattern identification data, and the measurement data and/or inspection data PNCMD/PNCID associated with the coordinate data and the pattern identification data may be transmitted to the server 180 directly or through the controller 140. Alternatively, the measurement data and/or inspection data CMD/CND associated with the coordinate data generated in the controller 140, the measurement data and/or inspection data PNMD/PNID associated with the pattern identification data, and the measurement data and/or inspection data PNCMD/PNCID associated with the coordinate data and the pattern identification data may be transmitted to the server 180.

The server 180 may generate a roll map including the measurement data and/or inspection data CMD/CND associated with the coordinate data generated in the controller 140, the measurement data and/or inspection data PNMD/PNID associated with the pattern identification data, and the measurement data and/or inspection data PNCMD/PNCID associated with the coordinate value and the pattern identification data. The roll map, for example, may indicate or display the measurement data and/or inspection data of the patterned electrode sheet based on the pattern identification data. Optionally, the roll map may further indicate the measurement data and/or inspection data based on the coordinate data, thereby significantly improving the visibility of information about the pattern of the patterned electrode sheet.

FIG. 9 illustrates a roll map of a double-sided electrode obtained by simulating the coating state of an actual patterned electrode sheet, wherein pattern identification data and coordinate data are displayed in a visual representation of the patterned electrode sheet with patterned electrodes formed on the upper and lower surfaces thereof. The portions other than the coated portions on the patterned electrode sheet are the uncoated portions.

FIG. 9 exemplarily shows a representation of an electrode sheet extending between a first end, indicated by coordinate value "0", and a second end, indicted by coordinate value 7.02m. A first uncoated portion next to the first end and a coated portion adjacent thereto may be combined to form a pattern which is identified by the pattern identification code formed by pattern number #1. Alternatively, the first coated portion next to the first end and an uncoated portion adjacent to the first coated portion in the direction of the second end may be combined to form a pattern which is identified by the pattern identification code formed by pattern number #1.The roll map displays pattern identification data of the detected patterns in the form of pattern numbers #1 to #8 that may have been acquired by a first position measuring device that sequentially detected the boundary lines between the uncoated and the coated portions to detect the patterns and acquired the pattern identification data of the detected patterns, here, in the form of pattern numbers #1 to #8. The roll map exemplarily shown in FIG. 9 also displays coordinate data (displayed in m units) acquired by a second position measuring device. To avoid data overload, the coordinate data may be displayed only on main portions of the roll map.

As shown in FIG. 9, a roll map may be generated not only for a single-sided electrode with coated portions formed on only one side of the patterned electrode sheet, but also for a double-sided electrode with a coated portion formed on both sides of the patterned electrode sheet. To prevent excessive increase of data represented in roll map, only main event information, e.g., in the form of processed monitoring data, may be collected and transmitted to the server. The server may generate the roll map for the double-sided electrode based on this. When performance and/or quality tracking is required for both the upper and lower surface patterns, the amount of data to be considered increases. Therefore, it may be possible to carry out performance and/or quality tracking based on only the patterns of one of the upper or lower surface. In the present example, only patterns of the lower or back surface are considered. It should be understood that the invention is not limited in this regard.

When the set pattern pitch or target pattern length is set to a predefined value, for example, to 878 mm, a pattern of an abnormal pitch can be displayed by comparing the set pattern pitch with the coordinate data associated with the pattern identification data acquired by the first position measuring instrument and the coordinate data acquired by the second position measuring instrument. FIG. 9 exemplarily shows a normal section coated according to the set pattern pitch. However, with respect on the lower surface of the electrode sheet, a pattern with an insufficient length is measured and displayed at the position of pattern number #4, an uncoated section is measured and displayed at the position of pattern number #5, and a pattern with an excessive length is measured and displayed at the position of pattern number #6. For example, a pattern that has a length of 0.5 times or less than the set pattern pitch or that has a length of 1.5 times or more than the set pattern pitch may be regarded as a defective pattern.

When an uncoated section not included in the pattern is present between neighboring patterns, pattern identification codes, e.g., in the form of pattern numbers, are assigned to the uncoated section equal the number of patterns obtained by dividing the length of the uncoated section by the set pattern pitch. Generally, if an uncoated gap section with a length greater than the target pattern length is detected between neighboring coating patterns, a corresponding pattern identification code is assigned to the gap section by detecting the length of the gap section, determining a number of target pattern lengths fitting into the length of the gap section, and assigning to the gap section one or more pattern identification codes corresponding to the determined number of target pattern lengths. In the example of FIG. 9, on the back side of the electrode sheet, pattern number #5 was assigned as pattern identification code to the uncoated section between the patterns identified by pattern numbers #4 and #6. When the pattern identification code is not assigned to the uncoated section, there is a gap in the roll map information and the state of the patterned electrode sheet cannot be completely expressed. Therefore, it is advantageous to assign pattern identification codes to the the uncoated section not included in a pattern, so that a roll map generated from the monitoring data reflects information about uncoated sections of the electrode sheet along with information about the pattern(s) with abnormal pitch that is different from the set pattern pitch. The information about the uncoated section may include the pattern identification codes, e.g., in the form of pattern numbers, assigned to the uncoated section corresponding to the number of patterns obtained by dividing the length of the uncoated section by the set pattern pitch.

As exemplarily shown in FIG. 9, information regarding reference points and seams may also be included in the monitoring data and reflected in the roll map.

Reference points M1, M2, and M3 are marked on the patterned electrode sheet at predetermined intervals. In the roll map, the actual positions of the reference points may be measured, and the positions and reference point intervals may be displayed. When the interval between the reference points deviates from a predefined interval, changes in the length of the electrode sheet that may occur during a respective (sub-)process or before and after the (sub-)process may be identified. Displaying in the roll map a connection tape, which is a seam, means that the electrode was broken for some reasons and was connected by the connection tape T1. The position of the connection tape T1 may be determined by acquiring coordinate values or pattern identification data regarding a start boundary line Ts and end boundary line Te of the connection tape. From this information, it is possible to identify the history of changes more accurately in the state of the actual patterned electrode sheet that was subjected to multiple (sub-)processes.

In FIG. 9, three reference points M1, M2, and M3 are exemplarily displayed, and the pattern numbers and coordinate values for each reference point are shown. The reference points may be measured by a reference point measuring device, and the seam may be measured by a seam sensor.

FIG. 10 illustrates a roll map in which pattern identification data and coordinate data are displayed in a coated section and an uncoated section.

In FIG. 10, pattern identification data includes pattern numbers as pattern identification codes, and the pattern numbers are displayed in sub-pattern number units.

In addition, coordinate values are displayed at predefined points.

In the example of FIG. 10, is the roll map reflects an uncoated section, and sub-pattern numbers are displayed even for the uncoated section in comparison with the set pattern pitch. The uncoated section includes an uncoated portion having a length corresponding to two set pattern pitches and an uncoated portion having a length corresponding to 0.6 times (0.6Pt) the set pattern pitch.

Meanwhile, only information on performance excluding the uncoated section may be collected and transmitted to the process controller. The controller may be a process controller that controls the respective (sub-)process, e.g., by controlling movement of the electrode sheet. The controller may determine and record performance indicators on the respective (sub-)process. For example, a number of coated sections on the electrode may be determined and recorded as a performance indicator. Among the pattern numbers in FIG. 10, only those that are not sub-pattern numbers (numbers not expressed in decimal units: for example, 24pt) are pattern numbers relevant for indicating performance. For example, in the uncoated section, the pattern number remains unchanged as 26pt, and becomes 27pt at the end of the uncoated section, so that the pattern number was increased by one.

In this manner, the pattern identification data and coordinate data can be freely displayed, and further, pattern numbers that are taken into account to determine a performance indicator and pattern numbers that are not taken into account to determine a performance indicator can be displayed separately.

Therefore, monitoring data and a roll map data that reflect the state of the physical patterned electrode may be generated, and the actual physical state of the electrode may be represented by the data in a significantly improved way.

The present invention has been described above in more detail through the drawings and examples. However, the embodiments described in this specification and configurations illustrated in drawings are only exemplary embodiments of the invention defined in the appended claims.

### [List of reference signs]

1000, 2000: battery manufacturing system
100: battery manufacturing apparatus
180: server
111: unwinder, 113: rewinder, 115: processing mechanism
125U, 125R: first position measuring device
121, 123: second position measuring device (first rotary encoder, second rotary encoder)
130: measuring device, 130P: sensing unit, 130S: processing unit
140: controller
300: user device

## Claims

1. A method for monitoring a battery manufacturing process in which a patterned electrode sheet is formed or processed, wherein the patterned electrode sheet includes a plurality of coating patterns, each coating pattern having at least one coated portion (2) and one uncoated portion (1), and wherein the method is carried out using a system comprising a first position measuring device (125R, 125U), and a measuring device and/or inspecting device (130), the method comprising:
acquiring, by the first position measuring device (125R, 125U) while the patterned electrode sheet moves through the battery manufacturing process, pattern identification data including pattern identification codes representing a respective one of the plurality of coating patterns by its position on the patterned electrode sheet, wherein acquiring the pattern identification data includes: detecting, by a sensor, a start boundary line indicating one end of a respective coating pattern, storing a time point or a coordinate value of detecting the start boundary line, detecting an end boundary line indicating an opposite end of the respective coating pattern, and storing a time point or a coordinate value of detecting the end boundary line, wherein, if an uncoated gap section with a length greater than a target pattern length is detected between neighboring coating patterns, the method assigns a corresponding pattern identification code to the gap section by:
- detecting the length of the gap section;
- determining a number of target pattern lengths fitting into the length of the gap section; and
- assigning to the gap section one or more pattern identification codes corresponding to the determined number of target pattern lengths;
acquiring, by the measuring device and/or inspecting device (130), measurement data and/or inspection data by measuring and/or inspecting the patterned electrode sheet while it moves through the battery manufacturing process; and
generating monitoring data on the battery manufacturing process by associating the measurement data and/or inspection data with the pattern identification data.

2. The method of claim 1,
wherein the pattern identification data is acquired as time series data in which each pattern identification code is matched with a set of time values, respectively, the measurement data and/or inspection data are acquired as time series data in which each measurement value and/or each inspection value is matched with one time value, respectively, and the pattern identification codes are associated with the measurement values and/or inspection values based on the time value commonly matched to them; and/or
wherein the method further includes:
acquiring coordinate data including coordinate values indicating positions on the patterned electrode sheet;
associating the coordinate data with the pattern identification data; and
associating the coordinate data with the measurement data and/or inspection data,
wherein the pattern identification codes are associated with the measurement values and/or inspection values based on the coordinate value commonly matched to them.

3. The method of claim 1 or 2, wherein the plurality of coating patterns is arranged consecutively in a longitudinal direction of the patterned electrode sheet.

4. The method of claim 3, wherein a respective one of the coating patterns includes one coated portion (2) and one uncoated portion (1) arranged next to the one coated portion (2) in the longitudinal direction of the electrode sheet.

5. The method of claim 3 or 4, wherein the pattern identification data includes pattern numbers as pattern identification codes, and wherein acquiring the pattern identification data includes counting the coating patterns in the longitudinal direction, such that the pattern number is increased or decreased for each counted coating pattern.

6. The method of any one of the preceding claims, further comprising:
detecting a length of a respective one of the coating patterns;
comparing the detected length of the respective coating pattern with a target pattern length; and
determining an abnormal pitch if the detected length of the respective coating pattern deviates by more than a predefined threshold from the target length.

7. The method of claim 6, wherein the target pattern length is a sum of a target length of one coated portion (2) and a target length of one uncoated portion (1).

8. The method of claim 6 or 7,
wherein the length of respective one of the coating patterns is determined by multiplying a difference between the time points of detecting the start and the end boundary line of the respective coating pattern by a moving speed of the patterned electrode sheet during the detection; and/or
wherein the length of each coating pattern is determined based on a difference in coordinate values between the start boundary line and the end boundary line of the respective coating pattern.

9. The method of any one of claims 2 to 8, insofar as being dependent upon claim 2, further comprising: associating the coordinate values with the time values, so that they share commonly associated identification codes and the measurement values and/or inspection values.

10. The method of any one of claims 6 to 9, insofar as being dependent upon claim 2, further comprising:
determining a length interval by dividing the target pattern length by an integer number greater than one; and
obtaining pattern sub-position codes, each representing a position within a respective coating pattern by dividing the coordinate values by the length interval and assigning one sub-position code to each coordinate value corresponding to an integer multiple of the length interval.

11. The method of any one of the preceding claims, further comprising:
generating a roll map from the monitoring data, the roll map being a graphical representation of the patterned electrode sheet augmented with the pattern identification data and the measurement data and/or inspection data associated with the pattern identification data and optionally further including coordinate data, and
visualizing the roll map and displaying the visualized roll map by means of a display device (190).

12. A system (1000, 2000) for monitoring a battery manufacturing process according to the method of any one of the preceding claims, comprising:
a first position measuring device (125R, 125U) configured to acquire the pattern identification data by detecting, by a sensor, a start boundary line indicating one end of a respective coating pattern, storing a time point or a coordinate value of detecting the start boundary line, detecting an end boundary line indicating an opposite end of the respective coating pattern, and storing a time point or a coordinate value of detecting the end boundary line; and
a measuring device and/or inspecting device (130) configured to acquire the measurement data and/or inspection data by measuring and/or inspecting the patterned electrode sheet,
wherein the system (1000, 2000) is configured to generate the monitoring data on the battery manufacturing process by associating the measurement data and/or inspection data with the pattern identification data, and, if an uncoated gap section with a length greater than a target pattern length is detected between neighboring coating patterns, to assign a corresponding pattern identification code to the gap section by:
- detecting the length of the gap section;
- determining a number of target pattern lengths fitting into the length of the gap section; and
- assigning to the gap section one or more pattern identification codes corresponding to the determined number of target pattern lengths.

13. The system (1000, 2000) of claim 12, further comprising:
a server (180) configured to generate at least parts of the monitoring data on the battery manufacturing process by associating the measurement data and/or inspection data with the pattern identification data.

14. The system (1000, 2000) of claim 12 or 13, further comprising:
a controller (140) configured to control movement of the patterned electrode sheet, in particular, between an unwinder (111, 1111) and a rewinder (113),
wherein the controller (140) and/or the measuring device and/or inspecting device (130) is configured to generate at least parts of the monitoring data by associating the pattern identification data with the measurement data and/or inspection data.

15. The system (1000, 2000) of any one of claims 12 to 14, insofar as referring to claim 2, further comprising a second position measuring device (121, 123) configured to acquire the coordinate data.

16. The system (1000, 2000) of any one of claims 13 to 15, insofar as referring to claims 13 and 11, further comprising a display device (190), wherein the server (180) is configured to generate the roll map and transmit a visualization command to the display device (190), and the display device (190) is configured to visualize the roll map and display the visualized roll map (VRM).

## Patentansprüche

1. Verfahren zum Überwachen eines Batterieherstellungsprozesses, bei dem eine gemusterte Elektrodenbahn gebildet oder verarbeitet wird, wobei die gemusterte Elektrodenbahn eine Vielzahl von Beschichtungsmustern umfasst, wobei jedes Beschichtungsmuster mindestens einen beschichteten Abschnitt (2) und einen unbeschichteten Abschnitt (1) aufweist, und wobei das Verfahren unter Verwendung eines Systems durchgeführt wird, das eine erste Positionsmessvorrichtung (125R, 125U) und eine Messvorrichtung und/oder Inspektionsvorrichtung (130) umfasst, wobei das Verfahren Folgendes umfasst:
Erfassen von Musteridentifikationsdaten durch die erste Positionsmessvorrichtung (125R, 125U), während sich die gemusterte Elektrodenbahn durch den Batterieherstellungsprozess bewegt, wobei die Musteridentifikationsdaten Musteridentifikationscodes umfassen, die jeweils eines der Vielzahl von Beschichtungsmustern durch seine Position auf der gemusterten Elektrodenbahn repräsentieren, wobei das Erfassen der Musteridentifikationsdaten Folgendes umfasst: Detektieren einer Anfangsgrenzlinie, die ein Ende eines jeweiligen Beschichtungsmusters angibt, durch einen Sensor, Speichern eines Zeitpunkts oder eines Koordinatenwerts der Detektion der Anfangsgrenzlinie, Detektieren einer Endgrenzlinie, die ein gegenüberliegendes Ende des jeweiligen Beschichtungsmusters angibt, und Speichern eines Zeitpunkts oder eines Koordinatenwerts der Detektion der Endgrenzlinie, wobei, falls zwischen benachbarten Beschichtungsmustern ein unbeschichteter Lückenabschnitt mit einer Länge größer als eine Sollmusterlänge detektiert wird, das Verfahren dem Lückenabschnitt einen entsprechenden Musteridentifikationscode durch Folgendes zuweist:
- Detektieren der Länge des Lückenabschnitts;
- Bestimmen einer Anzahl von Sollmusterlängen, die in die Länge des Lückenabschnitts passen; und
- Zuweisen eines oder mehrerer Musteridentifikationscodes zu dem Lückenabschnitt entsprechend der bestimmten Anzahl von Sollmusterlängen;
Erfassen von Messdaten und/oder Inspektionsdaten durch die Messvorrichtung und/oder Inspektionsvorrichtung (130) durch Messen und/oder Inspizieren der gemusterten Elektrodenbahn, während sie sich durch den Batterieherstellungsprozess bewegt; und
Erzeugen von Überwachungsdaten zu dem Batterieherstellungsprozess durch Verknüpfen der Messdaten und/oder Inspektionsdaten mit den Musteridentifikationsdaten.

2. Verfahren nach Anspruch 1,
wobei die Musteridentifikationsdaten als Zeitreihendaten erfasst werden, in denen jedem Musteridentifikationscode jeweils ein Satz von Zeitwerten zugeordnet ist, die Messdaten und/oder Inspektionsdaten als Zeitreihendaten erfasst werden, in denen jedem Messwert und/oder jedem Inspektionswert jeweils ein Zeitwert zugeordnet ist, und die Musteridentifikationscodes mit den Messwerten und/oder Inspektionswerten auf der Grundlage des ihnen gemeinsam zugeordneten Zeitwerts verknüpft werden; und/oder
wobei das Verfahren ferner Folgendes umfasst:
Erfassen von Koordinatendaten, die Koordinatenwerte umfassen, die Positionen auf der gemusterten Elektrodenbahn angeben;
Verknüpfen der Koordinatendaten mit den Musteridentifikationsdaten; und
Verknüpfen der Koordinatendaten mit den Messdaten und/oder Inspektionsdaten,
wobei die Musteridentifikationscodes mit den Messwerten und/oder Inspektionswerten auf der Grundlage des ihnen gemeinsam zugeordneten Koordinatenwerts verknüpft werden.

3. Verfahren nach Anspruch 1 oder 2, wobei die Vielzahl von Beschichtungsmustern aufeinanderfolgend in einer Längsrichtung der gemusterten Elektrodenbahn angeordnet ist.

4. Verfahren nach Anspruch 3, wobei ein jeweiliges der Beschichtungsmuster einen beschichteten Abschnitt (2) und einen unbeschichteten Abschnitt (1) umfasst, der in der Längsrichtung der Elektrodenbahn neben dem einen beschichteten Abschnitt (2) angeordnet ist.

5. Verfahren nach Anspruch 3 oder 4, wobei die Musteridentifikationsdaten Musternummern als Musteridentifikationscodes umfassen und wobei das Erfassen der Musteridentifikationsdaten das Zählen der Beschichtungsmuster in der Längsrichtung umfasst, sodass die Musternummer für jedes gezählte Beschichtungsmuster erhöht oder verringert wird.

6. Verfahren nach einem der vorhergehenden Ansprüche, ferner umfassend:
Detektieren einer Länge eines jeweiligen der Beschichtungsmuster;
Vergleichen der detektierten Länge des jeweiligen Beschichtungsmusters mit einer Sollmusterlänge; und
Bestimmen einer anormalen Teilung, falls die detektierte Länge des jeweiligen Beschichtungsmusters um mehr als einen vorgegebenen Schwellenwert von der Solllänge abweicht.

7. Verfahren nach Anspruch 6, wobei die Sollmusterlänge eine Summe aus einer Solllänge eines beschichteten Abschnitts (2) und einer Solllänge eines unbeschichteten Abschnitts (1) ist.

8. Verfahren nach Anspruch 6 oder 7,
wobei die Länge eines jeweiligen der Beschichtungsmuster durch Multiplizieren einer Differenz zwischen den Zeitpunkten der Detektion der Anfangs- und der Endgrenzlinie des jeweiligen Beschichtungsmusters mit einer Bewegungsgeschwindigkeit der gemusterten Elektrodenbahn während der Detektion bestimmt wird; und/oder
wobei die Länge jedes Beschichtungsmusters auf der Grundlage einer Differenz der Koordinatenwerte zwischen der Anfangsgrenzlinie und der Endgrenzlinie des jeweiligen Beschichtungsmusters bestimmt wird.

9. Verfahren nach einem der Ansprüche 2 bis 8, soweit von Anspruch 2 abhängig, ferner umfassend: Verknüpfen der Koordinatenwerte mit den Zeitwerten, sodass sie mit denselben Identifikationscodes und den Messwerten und/oder Inspektionswerten gemeinsam verknüpft sind.

10. Verfahren nach einem der Ansprüche 6 bis 9, soweit von Anspruch 2 abhängig, ferner umfassend:
Bestimmen eines Längenintervalls durch Dividieren der Sollmusterlänge durch eine ganze Zahl größer als eins; und
Erhalten von Musterunterpositionscodes, die jeweils eine Position innerhalb eines jeweiligen Beschichtungsmusters repräsentieren, durch Dividieren der Koordinatenwerte durch das Längenintervall und Zuweisen eines Unterpositionscodes zu jedem Koordinatenwert, der einem ganzzahligen Vielfachen des Längenintervalls entspricht.

11. Verfahren nach einem der vorhergehenden Ansprüche, ferner umfassend:
Erzeugen einer Rollenkarte aus den Überwachungsdaten, wobei die Rollenkarte eine grafische Darstellung der gemusterten Elektrodenbahn ist, die um die Musteridentifikationsdaten und die mit den Musteridentifikationsdaten verknüpften Messdaten und/oder Inspektionsdaten erweitert ist und optional ferner Koordinatendaten umfasst, und
Visualisieren der Rollenkarte und Anzeigen der visualisierten Rollenkarte mittels einer Anzeigevorrichtung (190).

12. System (1000, 2000) zum Überwachen eines Batterieherstellungsprozesses gemäß dem Verfahren nach einem der vorhergehenden Ansprüche, umfassend:
eine erste Positionsmessvorrichtung (125R, 125U), die dazu eingerichtet ist, die Musteridentifikationsdaten durch Detektieren einer Anfangsgrenzlinie, die ein Ende eines jeweiligen Beschichtungsmusters angibt, durch einen Sensor, Speichern eines Zeitpunkts oder eines Koordinatenwerts der Detektion der Anfangsgrenzlinie, Detektieren einer Endgrenzlinie, die ein gegenüberliegendes Ende des jeweiligen Beschichtungsmusters angibt, und Speichern eines Zeitpunkts oder eines Koordinatenwerts der Detektion der Endgrenzlinie zu erfassen; und
eine Messvorrichtung und/oder Inspektionsvorrichtung (130), die dazu eingerichtet ist, die Messdaten und/oder Inspektionsdaten durch Messen und/oder Inspizieren der gemusterten Elektrodenbahn zu erfassen,
wobei das System (1000, 2000) dazu eingerichtet ist, die Überwachungsdaten zu dem Batterieherstellungsprozess durch Verknüpfen der Messdaten und/oder Inspektionsdaten mit den Musteridentifikationsdaten zu erzeugen und, falls zwischen benachbarten Beschichtungsmustern ein unbeschichteter Lückenabschnitt mit einer Länge größer als eine Sollmusterlänge detektiert wird, dem Lückenabschnitt einen entsprechenden Musteridentifikationscode durch Folgendes zuzuweisen:
- Detektieren der Länge des Lückenabschnitts;
- Bestimmen einer Anzahl von Sollmusterlängen, die in die Länge des Lückenabschnitts passen; und
- Zuweisen eines oder mehrerer Musteridentifikationscodes zu dem Lückenabschnitt entsprechend der bestimmten Anzahl von Sollmusterlängen.

13. System (1000, 2000) nach Anspruch 12, ferner umfassend:
einen Server (180), der dazu eingerichtet ist, zumindest Teile der Überwachungsdaten zu dem Batterieherstellungsprozess durch Verknüpfen der Messdaten und/oder Inspektionsdaten mit den Musteridentifikationsdaten zu erzeugen.

14. System (1000, 2000) nach Anspruch 12 oder 13, ferner umfassend:
eine Steuervorrichtung (140), die dazu eingerichtet ist, die Bewegung der gemusterten Elektrodenbahn zu steuern, insbesondere zwischen einem Abwickler (111, 1111) und einem Wiederaufwickler (113),
wobei die Steuervorrichtung (140) und/oder die Messvorrichtung und/oder Inspektionsvorrichtung (130) dazu eingerichtet ist, zumindest Teile der Überwachungsdaten durch Verknüpfen der Musteridentifikationsdaten mit den Messdaten und/oder Inspektionsdaten zu erzeugen.

15. System (1000, 2000) nach einem der Ansprüche 12 bis 14, soweit auf Anspruch 2 rückbezogen, ferner umfassend eine zweite Positionsmessvorrichtung (121, 123), die dazu eingerichtet ist, die Koordinatendaten zu erfassen.

16. System (1000, 2000) nach einem der Ansprüche 13 bis 15, soweit auf die Ansprüche 13 und 11 rückbezogen, ferner umfassend eine Anzeigevorrichtung (190), wobei der Server (180) dazu eingerichtet ist, die Rollenkarte zu erzeugen und einen Visualisierungsbefehl an die Anzeigevorrichtung (190) zu übermitteln, und die Anzeigevorrichtung (190) dazu eingerichtet ist, die Rollenkarte zu visualisieren und die visualisierte Rollenkarte (VRM) anzuzeigen.

## Revendications

1. Procédé de surveillance d'un processus de fabrication de batterie où une feuille d'électrode à motifs est formée ou traitée, ladite feuille d'électrode à motifs présentant une pluralité de motifs de revêtement, chaque motif de revêtement ayant au moins une partie revêtue (2) et une partie non revêtue (1), ledit procédé étant mis en œuvre au moyen d'un système comprenant un premier dispositif de mesure de position (123R, 123U) et un dispositif de mesure et/ou d'inspection (130), ledit procédé comprenant :
l'acquisition, par un premier dispositif de mesure de position (123R, 123U), pendant que la feuille d'électrode à motifs se déplace au cours du processus de fabrication de batterie, de données d'identification de motif comprenant des codes d'identification de motif représentant un motif respectif parmi la pluralité de motifs de revêtement par sa position sur la feuille d'électrode à motifs, l'acquisition des données d'identification de motifs comprenant : la détection, par un capteur, d'une ligne limite de départ indiquant une extrémité d'un motif de revêtement respectif, la mémorisation d'un repère temporel ou d'une valeur de coordonnée de détection de la ligne limite de départ, la détection d'une ligne limite de fin indiquant une extrémité opposée du motif de revêtement respectif, et la mémorisation d'un repère temporel ou d'une valeur de coordonnée de détection de la ligne limite de fin, où, si une section d'espacement non revêtue ayant une longueur supérieure à une longueur de motif cible est détectée entre des motifs de revêtement voisins, ledit procédé attribue un code d'identification de motif correspondant à la section d'espacement par :
- détection de la longueur de la section d'espacement ;
- détermination d'un nombre de longueurs de motif cible s'ajustant dans la longueur de la section d'espacement ;
- attribution à la section d'espacement d'un ou plusieurs codes d'identification de motif correspondant au nombre de longueurs de motif cible déterminé ;
l'acquisition, par le dispositif de mesure et/ou le dispositif d'inspection (130), de données de mesure et/ou de données d'inspection par mesure et/ou inspection de la feuille d'électrode à motifs pendant son déplacement au cours du processus de fabrication de batterie ; et
la génération de données de surveillance sur le processus de fabrication de batterie par association des données de mesure et/ou des données d'inspection avec les données d'identification de motif.

2. Procédé selon la revendication 1,
où les données d'identification de motif sont acquises en tant que données de série temporelle dans lesquelles chaque code d'identification de motif est mis en correspondance avec un ensemble de valeurs temporelles respectif, les données de mesure et/ou les données d'inspection sont acquises en tant que données de série temporelle dans lesquelles chaque valeur de mesure et/ou chaque valeur d'inspection est mise en correspondance avec une valeur temporelle respective, et les codes d'identification de motif sont associés aux valeurs de mesure et/ou aux valeurs d'inspection sur la base de la valeur temporelle qui est communément mise en correspondance avec celles-ci ; et/ou
où ledit procédé comprend en outre :
l'acquisition de données de coordonnées comprenant des valeurs de coordonnées indiquant des positions sur la feuille d'électrode à motifs ;
associer les données de coordonnées aux données d'identification du motif ; et à associer les données de coordonnées aux données de mesure et/ou aux données d'inspection les codes d'identification de motif étant associés aux valeurs de mesure et/ou aux valeurs d'inspection sur la base de la valeur de coordonnée qui leur correspond en commun.

3. Procédé selon la revendication 1 ou la revendication 2, où la pluralité de motifs de revêtement est disposée successivement dans le sens de la longueur de la feuille d'électrode à motifs.

4. Procédé selon la revendication 3, où un des motifs de revêtement respectifs comprend une partie revêtue (2) et une partie non revêtue (1) disposée à côté de la partie revêtue (2) dans le sens de la longueur de la feuille d'électrode.

5. Procédé selon la revendication 3 ou la revendication 4, où les données d'identification de motif comprennent des numéros de motif en tant que codes d'identification de motif, et où l'acquisition des données d'identification de motif comprend le comptage des motifs de revêtement dans le sens de la longueur, de telle manière que le nombre de motifs est augmenté ou diminué pour chaque motif de revêtement compté.

6. Procédé selon l'une des revendications précédentes, comprenant en outre :
la détection d'une longueur d'un des motifs de revêtement respectifs ;
la comparaison de la longueur détectée du motif de revêtement respectif avec une longueur de motif cible ; et
la détermination d'un pas anormal si la longueur détectée du motif de revêtement respectif diffère de plus d'un seuil prédéfini de la longueur cible.

7. Procédé selon la revendication 6, où la longueur de motif cible est une somme d'une longueur cible d'une partie revêtue (2) et d'une longueur cible d'une partie non revêtue (1).

8. Procédé selon la revendication 6 ou la revendication 7,
où la longueur de l'un des motifs de revêtement respectifs est déterminée par multiplication d'une différence entre les repères temporels de détection de la ligne limite de début et de la ligne limite de fin du motif de revêtement respectif par une vitesse de déplacement de la feuille d'électrode à motifs pendant la détection ; et/ou
où la longueur de chaque motif de revêtement est déterminée sur la base d'une différence de valeurs de coordonnées entre la ligne limite de début et la ligne limite de fin du motif de revêtement respectif.

9. Procédé selon l'une des revendications 2 à 8, si dépendante de la revendication 2, comprenant en outre : l'association des valeurs de coordonnées avec les valeurs temporelles, afin qu'elles partagent des codes d'identification communément associés et les valeurs de mesure et/ou les valeurs d'inspection.

10. Procédé selon l'une des revendications 6 à 9, si dépendante de la revendication 2, comprenant en outre :
la détermination d'un espacement en longueur par division de la longueur du motif cible par un nombre entier supérieur à un ; et
l'obtention de codes de sous-position de motif, représentant chacun une position dans un motif de revêtement respectif par division des valeurs de coordonnées par l'espacement en longueur, et l'attribution d'un code de sous-position à chaque valeur de coordonnées correspondant à un multiple entier de l'espacement en longueur.

11. Procédé selon l'une des revendications précédentes, comprenant en outre : la génération d'une carte de rouleau à partir des données de surveillance, ladite carte de rouleau étant une représentation graphique de la feuille d'électrode à motifs augmentée des données d'identification de motif et des données de mesure et/ou des données d'inspection associées aux données d'identification de motif, et comprenant en outre, facultativement, des données de coordonnées, et
la visualisation de la carte de rouleau et l'affichage de la carte de rouleau visualisée au moyen d'un dispositif d'affichage (190).

12. Système (1000, 2000) de surveillance d'un processus de fabrication de batterie conformément au procédé selon l'une des revendications précédentes, comprenant :
un premier dispositif de mesure de position (125R, 125U) configuré pour acquérir les données d'identification de motif par détection, au moyen d'un capteur, d'une ligne limite de départ indiquant une extrémité d'un motif de revêtement respectif, mémorisation d'un repère temporel ou d'une valeur de coordonnée de détection de la ligne limite de départ, détection d'une ligne limite de fin indiquant une extrémité opposée du motif de revêtement respectif, et mémorisation d'un repère temporel ou d'une valeur de coordonnée de détection de la ligne limite de fin ; et
un dispositif de mesure et/ou un dispositif d'inspection (130) configuré pour acquérir les données de mesure et/ou les données d'inspection par mesure et/ou inspection de la feuille d'électrode à motifs,
ledit système (1000, 2000) étant configuré pour générer les données de surveillance sur le processus de fabrication de batterie par association des données de mesure et/ou des données d'inspection avec les données d'identification de motif, et, si une section d'espacement non revêtue ayant une longueur supérieure à une longueur de motif cible est détectée entre des motifs de revêtement voisins, pour attribuer un code d'identification de motif correspondant à la section d'espacement par :
- détection de la longueur de la section d'espacement ;
- détermination d'un nombre de longueurs de motif cible s'ajustant dans la longueur de la section d'espacement ; et
- attribution à la section d'espacement d'un ou de plusieurs codes d'identification de motif correspondant au nombre de longueurs de motif cible déterminé.

13. Système (1000, 2000) selon la revendication 12, comprenant en outre :
un serveur (180) configuré pour générer au moins des parties des données de surveillance sur le processus de fabrication de batterie par association des données de mesure et/ou des données d'inspection aux données d'identification de motif.

14. Système (1000, 2000) selon la revendication 12 ou la revendication 13, comprenant en outre :
un contrôleur (140) configuré pour commander le déplacement de la feuille d'électrode à motifs, en particulier, entre un dérouleur (111, 1111) et un enrouleur (113),
où le contrôleur (140) et/ou le dispositif de mesure et/ou le dispositif d'inspection (130) sont configurés pour générer au moins des parties des données de surveillance par association des données d'identification de motif aux données de mesure et/ou aux données d'inspection.

15. Système (1000, 2000) selon l'une des revendications 12 à 14, si dépendante de la revendication 2, comprenant en outre un deuxième dispositif de mesure de position (121, 123) configuré pour acquérir les données de coordonnées.

16. Système (1000, 2000) selon l'une des revendications 13 à 15, si dépendante des revendications 13 et 11, comprenant en outre un dispositif d'affichage (190), le serveur (180) étant configuré pour générer la carte de déroulement et transmettre une instruction de visualisation au dispositif d'affichage (190), et le dispositif d'affichage (190) étant configuré pour visualiser la carte de rouleau et afficher la carte de rouleau visualisée (VRM).
